# EUROPÄISCHE PATENTANMELDUNG

(11) **EP 2 998 597 A1**
(43) Veröffentlichungstag der Anmeldung: **23.03.2016**
(21) Anmeldenummer: 15179635.6
(22) Anmeldetag: 04.08.2015
(51) Int. Cl.: F16C 33/10, F16N 37/00, F16N 21/00, F16N 9/04, F16N 1/00, F16C 29/04

(54) **LINEARSYSTEM, UMFASSEND EINEN SCHMIERMITTELGEBER FÜR EIN LINEARLAGER**

(30) Priorität: 22.08.2014 DE 102014216686
(71) Anmelder: Aktiebolaget SKF, 415 50 Göteborg (SE)
(72) Erfinder: FRIEDRICH, Thomas, 97262 Hausen (DE)
(74) Vertreter: Kuhstrebe, Jochen

(57) **Zusammenfassung**

Ausführungsbeispiele beziehen sich auf ein Linearsystem. Das Linearsystem umfasst ein ortsfestes Bauteil und einen Schmiermittelgeber 110 für ein Linearlager 125. Der Schmiermittelgeber 110 umfasst eine Düse 112 und eine Befestigungsstruktur 114. Die Befestigungsstruktur 114 ist ausgebildet, um die Düse 112 starr mit einem ortsfesten Bauteil 115 zu verbinden und parallel zu einer Laufrichtung 140 des Linearlagers 125 auszurichten. Das Linearsystem umfasst zudem ein Linearlager 125, welches einen Schmiernippel 132 aufweist, welcher derart parallel zu einer Laufrichtung 140 des Linearlagers 125 ausgerichtet ist, dass ein Endpunkt einer durch Bewegen des Linearlagers 125 entlang des ortsfesten Bauteils 115 entstehenden Bewegungslinie des Schmiernippels 132 auf der Düse 112 des Schmiermittelgebers 110 liegt.

## Beschreibung

Vorliegende Ausführungsbeispiele liegen auf dem Gebiet der Linearsysteme, insbesondere solcher, welche einen Schmiermittelgeber für ein Linearlager umfassen.

In vielen Bereichen der Technik, werden bewegliche Strukturen oder Bauteile eingesetzt, deren Bewegung beispielsweise durch ein Führungselement vorgegeben sein kann. Ein Beispiel hierfür stellen Lineareinheiten dar. Lineareinheiten, z.B. Linearkugellager oder Profilschienensysteme, können sich längs einer vorgegebenen Bahn bewegen. Diese Bahn kann beispielsweise mehrere Meter Länge betragen. Es kann dabei erforderlich sein, Lineareinheiten regelmäßig, auch vorhandenen Einsatzbedingungen entsprechend, nachzuschmieren.

Es kann beispielsweise eine manuelle Nachschmierung der Lineareinheiten möglich sein. Bei kürzeren Schmierintervallen kann diese Methode jedoch entsprechend häufigere Maschinenstillstände, und dadurch ggf. erhebliche Kosten verursachen. Eine weitere Möglichkeit für eine Nachschmierung sind automatische Schmiersysteme. Um die Lineareinheiten automatisch nachschmieren zu können, kann das gesamte Schmiersystem mitbewegt werden. Ein Mitführen des Schmiersystems kann allerdings das Gesamtgewicht der bewegten Teile erhöhen und somit die Dynamik des Systems reduziert. Außerdem wird das Schmiersystem den Beschleunigungen der Linearbewegung ausgesetzt, was unter Umständen zu Materialermüdung und damit einhergehendem Verschleiß führen kann. Alternativ können Schmierleitungen im Kabelschlepp mitgeführt werden. Ein Mitführen der Schmierleitungen über Kabelschlepp kann hingegen zusätzliche Bauteile erfordern, die möglicherweise eine Relativbewegung durchführen, und somit Verschleiß unterlegen sein können. Zusätzlich kann es hierbei erforderlich sein, die Schmierleitungen vor Beschädigungen zu schützen. Die genannten Konsequenzen können ferner auch bei weiteren Strukturen zu Tage treten, bei denen bewegliche Komponenten umfasst sind, welche einer regelmäßigen Nachschmierung bedürfen.

Es ist daher wünschenswert, einen verbesserten Kompromiss aus Materialersparnis, Verschleißreduktion, Dynamik und einer Verfügbarkeit von Schmiermittel zu bewirken.

Diesen Anforderungen tragen ein Linearsystem und ein Verfahren für einen Schmiermittelgeber für ein Linearlagergemäß den unabhängigen Patentansprüchen Rechnung.

Gemäß einem ersten Aspekt beziehen sich Ausführungsbeispiele auf ein Linearsystem. Das Linearsystem umfasst ein ortsfestes Bauteil und einen Schmiermittelgeber für ein Linearlager. Der Schmiermittelgeber umfasst eine Düse und eine Befestigungsstruktur. Die Befestigungsstruktur ist ausgebildet, um die Düse starr mit einem ortsfesten Bauteil zu verbinden und parallel zu einer Laufrichtung ein Linearlagerauszurichten. Das Linearsystem umfasst zudem ein Linearlager, welches einen Schmiernippel aufweist, welcher derart parallel zu einer Laufrichtung des Linearlagers ausgerichtet ist, dass ein Endpunkt einer durch Bewegen des Linearlagers entlang des ortsfesten Bauteils entstehenden Bewegungslinie des Schmiernippels auf der Düse des Schmiermittelgebers liegt. Ein Mitführen des Schmiermittelgebers oder von Zuleitungen mit dem Linearlagerkann somit entfallen. Dadurch kann eine verbesserte Maschinendynamik erreicht oder Material eingespart werden. Außerdem kann das Linearlager an den Schmiermittelgeber individuell angepasst sein, und dadurch ein Schmiervorgang ermöglicht werden, bei dem ggf. eine Stillstandszeit des Linearsystems verkürzt werden oder sogar entfallen kann.

Bei einigen Ausführungsbeispielen umfasst die Befestigungsstruktur einen Wellenbock. Hiermit kann eine stabilere Ausrichtung des Schmiermittelgebers auf das Linearlager erreicht werden.

Bei manchen Ausführungsbeispielen ist die Düse mit einem parallel zu der Laufrichtung des Linearlagers ausgerichteten Schmiernippel reversibel verbindbar, sodass ein Übertrag von Schmiermittel von der Düse über den Schmiernippel in das Linearlager ermöglicht wird. Somit kann das Linearlager ggf. bei einem bestehenden Bedarf an Schmiermittel an den Schmiermittelgeber eingekoppelt, und bei einem gedeckten Bedarf entsprechend wieder ausgekoppelt werden, und dadurch eine manuelle Nachschmierung unter Umständen entfallen.

Bei einigen Ausführungsbeispielen bewirkt ein Verbinden des Schmiernippels mit der Düse einen Austritt eines Schmiermittels parallel zu der Laufrichtung des Linearlagers über die Düse. Das Einkoppeln kann somit einen Schmiervorgang auslösen, und dadurch der Schmiervorgang noch weiter automatisiert werden.

Bei manchen Ausführungsbeispielen umfasst der Schmiermittelgeber ferner ein mit der Düse verbundenes Dosiersystem. Das Dosiersystem ist dazu ausgebildet, eine vordefinierte Menge an Schmiermittel über die Düse abzugeben. Hierdurch kann es möglich sein, eine bereitgestellte Menge an Schmiermittel pro Schmiervorgang individuell an einen Bedarf anzupassen.

Bei manchen Ausführungsbeispielen umfasst der Schmiermittelgeber ferner eine mit der Düse verbundene Schmiermittelkammer. Dabei wird bei Erreichen des Endpunkts der Bewegungslinie des Schmiernippels der Schmiernippel mit der Düse reversibel verbunden, und eine Druckkraft auf die Schmiermittelkammer ausgelöst, welche ein Einbringen von Schmiermittel über die Düse und den Schmiernippel in das Linearlager bewirkt. Eine Abgabe von Schmiermittel durch den Schmiermittelgeber kann so zu einem Zeitpunkt unmittelbar nach einem Einkoppeln des Schmiernippels an die Düse erfolgen, wodurch eine Zeitersparnis bei dem Schmiervorgang möglich werden kann.

Bei einigen Ausführungsbeispielen umfasst das Linearlager ferner einen Sensor, welcher dazu ausgebildet ist, eine Veränderung einer Menge an Schmiermittel in dem Linearlager zu ermitteln, und ein Signal bereitzustellen, sobald die Veränderung einen vordefinierten Grenzwert überschreitet. Dabei veranlasst das Signal ein Bewegen des Linearlagers derart, dass der Schmiernippel mit der Düse reversibel verbunden wird. Es kann so ein Nachschmiervorgang je nach einem aktuellen Schmiermittelbedarf automatisch ausgelöst werden. Mit anderen Worten kann ein externes Ansteuern des Linearsystems dabei entfallen.

Gemäß einem weiteren Aspekt beziehen sich Ausführungsbeispiele auf ein Verfahren für einen Schmiermittelgeber für ein Linearlager. Das Verfahren umfasst ein starres Verbinden eines ortsfesten Bauteils mit einem Schmiermittelgeber. Das Verfahren umfasst außerdem ein reversibles Verbinden eines Linearlagers an den starr mit dem ortsfesten Bauteil verbundenen Schmiermittelgeber. Weiterhin umfasst das Verfahren ein Übertragen von Schmiermittel von dem Schmiermittelgeber in das Linearlager. Es können somit möglicherweise zusätzliche Bauteile oder unerwünschte Stillstandszeiten entfallen. Ferner kann eine durch das Linearlager bewegte Masse reduziert werden, und eine bei einem Schmiervorgang übertragene Schmiermittelmenge an einen zu erwartenden Bedarf angepasst werden.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben. Es zeigen im Einzelnen:
- Fig. 1: ein Linearsystem mit einem Schmiermittelgeber für ein Linearlager gemäß einem Ausführungsbeispiel, einem Linearlager und einem ortsfesten Bauteil;
- Fig. 2: verschiedene Ansichten einer Befestigungsstruktur für einen Schmiermittelgeber gemäß einem Ausführungsbeispiel;
- Fig. 3: verschiedene Ansichten einer Befestigungsstruktur für einen Schmiermittelgeber gemäß einem weiteren Ausführungsbeispiel; und
- Fig. 4: ein Flussdiagramm eines Verfahrens für einen Schmiermittelgeber gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

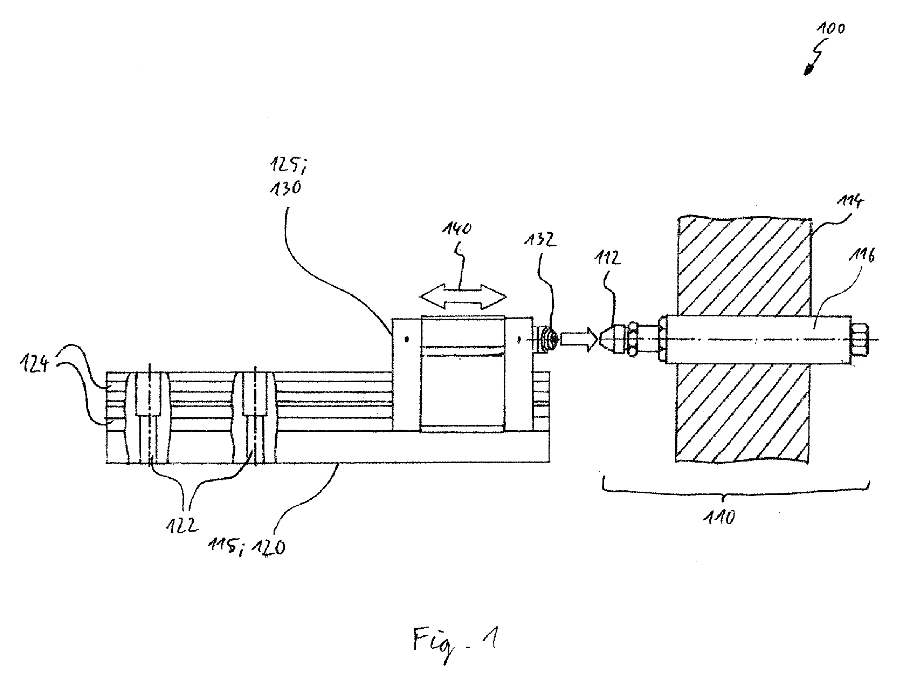

Fig. 1 zeigt ein Linearsystem 100 gemäß einem Ausführungsbeispiel. Das Linearsystem 100 umfasst einen Schmiermittelgeber 110, ein ortsfestes Bauteil 115 und ein Linearlager 125. Der Schmiermittelgeber 110 umfasst eine Düse 112 und eine Befestigungsstruktur 114. Die Befestigungsstruktur ist ausgebildet, um die Düse 112 starr mit dem ortsfesten Bauteil 115 zu verbinden und parallel zu einer Laufrichtung 140 des Linearlagers 125 auszurichten.

Das ortsfeste Bauteil 115 erstreckt sich entlang einer Laufrichtung über eine größere Länge als entlang einer senkrecht zu der Laufrichtung stehenden Raumrichtung, und ist dazu ausgebildet, das Linearlager 125 entlang der Laufrichtung zu führen. Lediglich beispielhaft ist in Fig. 1 das ortsfeste Bauteil 115 als Profilschiene 120, und das Linearlager 125 als Profilschienenwagen 130 dargestellt. Das Linearsystem 100 kann jedoch bei anderen Ausführungsbeispielen auch ein Linearkugellager sein.

Der Profilschienenwagen 130 weist einen Schmiernippel 132 auf, welcher derart parallel zu der Laufrichtung 140 des Profilschienenwagens 130 ausgerichtet ist, dass ein Endpunkt einer durch Bewegen des Profilschienenwagens 130 entlang der Profilschiene 120 entstehenden Bewegungslinie des Schmiernippels 132 auf der Düse 112 des Schmiermittelgebers 110 liegt.

Räumliche Angaben über eine Ausrichtung der Düse 112 oder des Schmiernippels 132 beziehen sich auf einen darin verlaufenden Schmiermittelkanal. Eine parallele Ausrichtung z.B. der Düse 112 zu der Laufrichtung 140 des Profilschienenwagens 130 bedeutet, dass ein innerhalb der Düse 112 angeordneter Schmiermittelkanal parallel zu der Laufrichtung 140 verläuft.

Die Befestigungsstruktur 114 kann stoff-, kraft- oder formschlüssige Verbindungen aufweisen. Die Befestigungsstruktur 114 ist bei einem Ausführungsbeispiel ein Wellenbock. Ein Wellenbock kann eine Vorrichtung sein, welche geeignet ist, um eine Welle, z. B. mittels eines Wellenlagers, zu befestigen. Eine Welle kann ein stabförmiges Maschinenelement sein, das z. B. zum Weiterleiten von Drehbewegungen und Drehmomenten sowie zur Lagerung von rotierenden Teilen ausgebildet ist. Der Wellenbock kann entsprechend eine kreisförmige Aussparung zur Aufnahme der Welle aufweisen. Der Wellenbock kann zudem dreh- oder ortsfest an einem weiteren Bauteil montiert sein. Die Befestigungsstruktur 114 kann hingegen bei weiteren Ausführungsbeispielen ein Flansch sein, oder auch lediglich ein Gehäuse des Schmiermittelgebers 110, welches z.B. für eine stoffschlüssige Verbindung mittels Klebstoff oder einer Schweißnaht geeignet sein kann. Die Düse 112 kann direkt über die Befestigungsstruktur 114 mit der Profilschiene 120 verbunden sein, oder indirekt über ein weiteres Werkstück, welches in Fig. 1 nicht dargestellt ist.

Die Profilschiene 120 weist in dem gezeigten Ausführungsbeispiel Schraubbohrungen 122 zum Verbinden mit dem weiteren Werkstück oder einem anderen beliebigen Bauteil auf. Ferner umfasst die Profilschiene 120 mehrere Laufrillen 124, welche einer Führung des Profilschienenwagens 130 entlang der Laufrichtung 140 dienen.

Wird der Profilschienenwagen 130 entlang der Profilschiene 120 auf den Schmiermittelgeber 110 zu bewegt, kann der Schmiernippel 132 bei Erreichen eines Endpunktes der Bewegung (oder mit anderen Worten, bei einer maximal in diese Richtung möglichen Bewegung) mit der Düse 112 in Kontakt gebracht werden. Bei manchen Ausführungsbeispielen ist die Düse 112 mit dem parallel zu der Laufrichtung 140 des Profilschienenwagens 130 ausgerichteten Schmiernippel 132 reversibel verbindbar, sodass ein Übertrag von Schmiermittel von der Düse 112 über den Schmiernippel 132 in den Profilschienenwagen 130 ermöglicht wird. Der Schmiernippel 132 weist hierzu einen Schmiermittelkanal auf, welcher mit einem Bereich verbunden ist, der eine Anzahl an Wälzkörpern des Profilschienenwagens 132 aufnimmt. Dies kann beispielsweise ein Umlenkbereich der Wälzkörper sein. Ferner ist ein Schmiermittelkanal der Düse 112 mit einer Schmiermittelkammer 116 verbunden. Das Schmiermittel kann hierbei z.B. ein Fett oder Öl sein.

Reversibel verbindbar kann hierbei bedeuten, dass eine bereits hergestellte Verbindung beschädigungsfrei wieder lösbar ist, dass eine Verbindung wiederholt herstellbar ist, oder dass ein Lösen der Verbindung ohne Werkzeugaufwand erfolgen kann. Die Verbindung kann z.B. ein Druckkontakt oder eine Steckverbindung sein. Ferner kann der Schmiernippel 132 optional eine Nut aufweisen, und mit der Nut in die Düse 112 einrasten.

Die Düse 112 des Schmiermittelgebers 110 kann entsprechend einen sich radial nach innen erstreckenden Einzug zum Einrasten des Schmiernippels 132 aufweisen. Dieser kann beispielsweise kreisförmig entlang einer radial innen gelegenen Wand der Düse 112 und in Umfangsrichtung verlaufen, und ferner durchgehend oder unterbrochen sein. Der Einzug kann beispielsweise auch als Grat oder als Feder bezeichnet werden. Durch ein gegenseitiges Einrasten von Nut und Feder oder Grat kann ein verbesserter Sitz des Schmiernippels 132 auf der Düse 112 erzielt werden, und ggf. ein ungewollter Austritt von Schmiermittel zwischen Schmiernippel 132 und Düse 112 vermieden werden.

Bei einigen Ausführungsbeispielen bewirkt ein Verbinden des Schmiernippels 132 mit der Düse 112 einen Austritt eines Schmiermittels parallel zu der Laufrichtung 140 des Profilschienenwagens 130 über die Düse 112. Das Einkoppeln kann somit direkt einen Schmiervorgang auslösen. Beispielsweise kann durch eine Anfahrgeschwindigkeit des Profilschienenwagens 130 über den Schmiernippel 132 eine Druckkraft auf die Düse 112 ausgeübt werden, und dadurch ein Austritt von Schmiermittel über die Düse 112 verursacht werden. Das Einkoppeln kann alternativ den Schmiervorgang indirekt auslösen. Beispielsweise kann mittels einer Lichtschranke ein Anfahren der Düse 112 durch den Profilschienenwagen 130 festgestellt werden, und in Reaktion ein Signal an einen Druckerzeuger bereitgestellt werden. Das Signal bewirkt eine Druckbeaufschlagung der Schmiermittelkammer 116 durch den Druckerzeuger, was einen Austritt von Schmiermittel aus der Düse 112 bewirkt.

Bei manchen Ausführungsbeispielen umfasst der Schmiermittelgeber 110 ferner ein mit der Düse 112 verbundenes Dosiersystem. Das Dosiersystem ist dazu ausgebildet, eine vordefinierte Menge an Schmiermittel über die Düse 112 abzugeben. Beispielsweise kann die Düse 112 dabei durch eine Feder gegen die Schmiermittelkammer 116 abgestützt sein. Bei einem Einkoppeln des Profilschienenwagens 130 an den Schmiermittelgeber 110, oder anders ausgedrückt, einem reversiblen Verbinden des Schmiernippels 132 mit der Düse 112, wird ein Druck auf die Feder ausgeübt, und durch diesen Druck eine Bewegung der Düse 112 in Richtung der Schmiermittelkammer 116 bewirkt. Dabei kann die Düse 112 derart ausgebildet sein, dass in Folge der Bewegung der Düse 112 zu der Schmiermittelkammer 116 hin ein Austritt von Schmiermittel über die Düse 112 und den Schmiernippel 132 in den Profilschienenwagen 130 ermöglicht wird. Bei Abkoppeln des Profilschienenwagens 130, oder Lösen der reversiblen Verbindung, wird die Düse 112 durch die Feder wieder in eine ursprüngliche Position zurück versetzt, und dabei ein weiterer Austritt von Schmiermittel verhindert. Eine Dosiermenge kann dabei beliebig vorgegeben sein, und an einen individuell bei dem Linearsystem 100 anfallenden Bedarf angepasst sein.

Bei einigen Ausführungsbeispielen umfasst der Profilschienenwagen 130 ferner einen Sensor, welcher dazu ausgebildet ist, eine Veränderung einer Menge an Schmiermittel in dem Profilschienenwagen 130 zu ermitteln, und ein Signal bereitzustellen, sobald die Veränderung einen vordefinierten Grenzwert überschreitet. Dabei veranlasst das Signal ein Bewegen des Profilschienenwagens 130 derart, dass der Schmiernippel 132 mit der Düse 112 reversibel verbunden wird. Der Sensor kann beispielsweise dazu ausgebildet sein, eine Stoffkonzentration oder eine Viskosität eines Stoffes zu messen. Aus der Messgröße kann die Veränderung der Menge an Schmiermittel bestimmt werden. Die Messung kann beispielsweise bei einem Lastbereich des Profilschienenwagens 130 oder bei dem Umlenkbereich der Wälzkörper erfolgen. Ist der Grenzwert über- oder unterschritten, kann das Signal beispielsweise an einen Motor oder Aktuator bereitgestellt werden, welcher den Profilschienenwagen 130 antreibt. Der Profilschienenwagen 130 kann somit den Schmiermittelgeber 110 anfahren.

Bei einem Ausführungsbeispiel kann der Profilschienenwagen 130 einen gegenüber dem Schmiernippel 132 angeordneten, weiteren Schmiernippel aufweisen. Zusätzlich kann an einem Ende der Profilschiene 120 der Schmiermittelgeber 110, und an einem dem Ende entgegen gerichteten weiteren Ende der Profilschiene 120 ein weiterer Schmiermittelgeber 110 angeordnet sein. Der weitere Schmiernippel und der weitere Schmiermittelgeber können im Wesentlichen identisch zu dem Schmiernippel 132 und dem Schmiermittelgeber 132 aufgebaut sein. Mit anderen Worten kann sich der Profilschienenwagen 130 entlang einer endlichen, festen Bahn bewegen, und beide Enden der Profilschiene 120 anfahren. Es kann bei Erreichen einer beliebigen der beiden Endpositionen ein Schmiervorgang erfolgen.

Anders ausgedrückt beziehen sich manche Ausführungsbeispiele auf einen Schmiermittelgeber oder ein Nachschmiersystem, welches ein Dosiersystem für Schmierstoff umfasst, welches automatisch an den Profilschienenwagen (auch als Lineareinheit bezeichnet) angedockt werden kann. Die Lineareinheit verfügt über ein als Schmiernippel ausgebildetes, entsprechendes Gegenstück. Durch ein über eine Maschinensteuerung kontrolliertes Anfahren der jeweiligen Endposition wird die Lineareinheit mit dem Nachschmiersystem automatisch verbunden und eine definierte Schmierstoffmenge zugeführt. Die Anzahl der Nachschmiervorgänge kann entsprechend den Betriebsbedingungen festgelegt werden, und kann über ein Erfassen eines Betriebszustandes über die Maschinensteuerung angepasst werden. Je nach Ausgestaltung kann so das automatische Andocken, Verbinden oder Nachschmieren beispielsweise ohne einen Eingriff eines Benutzers oder eines Wartungsmitarbeiters erfolgen. Eine von einem menschlichen Eingriff unabhängige Aktion kann so gegebenenfalls erfolgen. Diese kann beispielsweise stets oder auch eine Interaktion mit einem Steuergerät, einer Maschinensteuerung oder einem andern elektrischen, elektronischen und/oder mechanischen Gerät oder System erfolgen. So kann beispielsweise das automatische Nachschmieren nach dem Andocken des Profilschienenwagens stets erfolgen, es kann jedoch auch ein Steuersignal an ein Ventil oder einen anderen Aktuator erfordern.

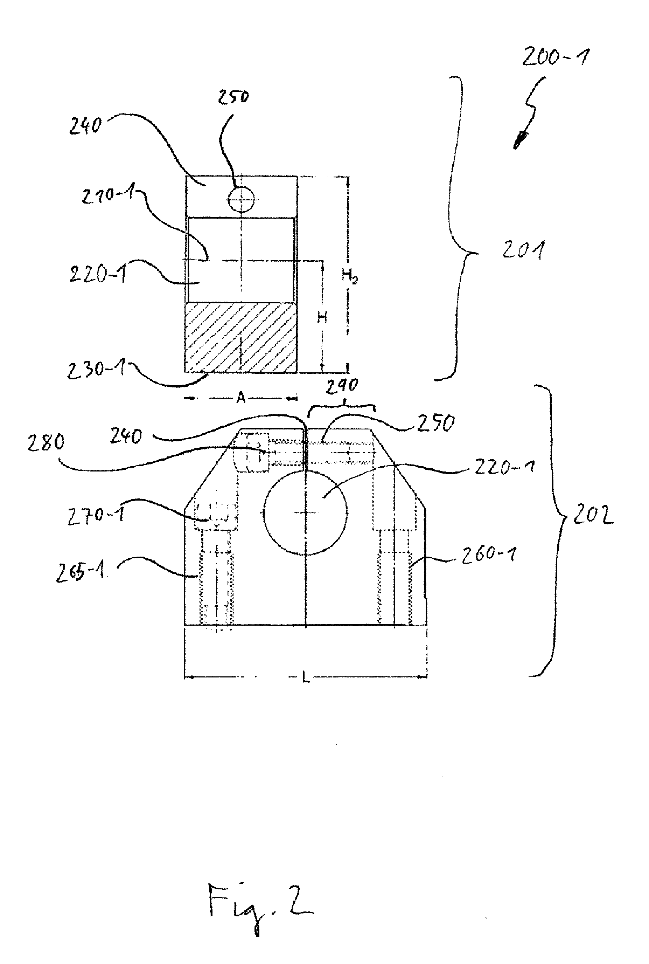

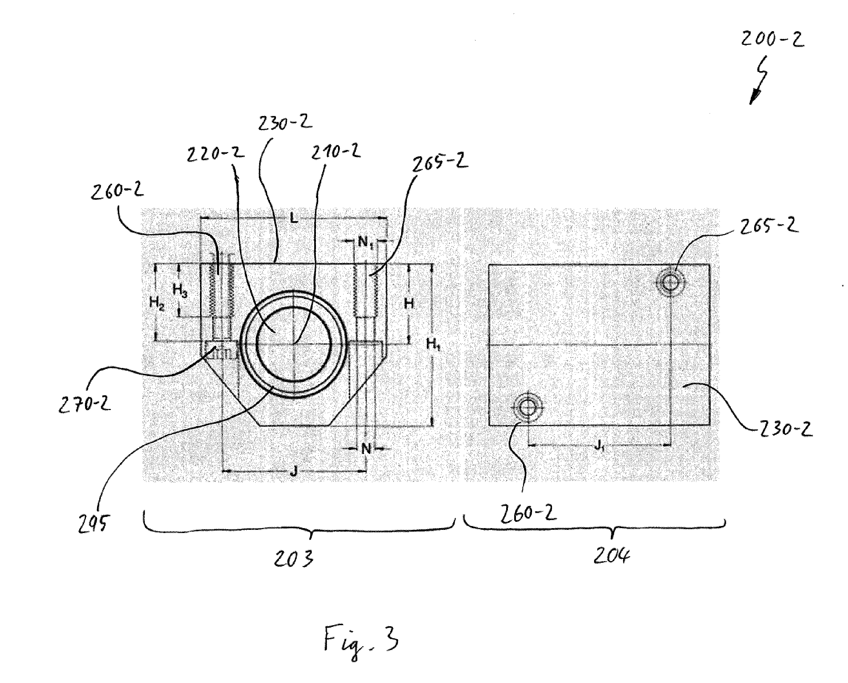

Wie bereits zuvor erwähnt, umfasst die Befestigungsstruktur bei manchen Ausführungsbeispielen ein Wellenbock. Verschiedene Ausführungsbeispiele eines Wellenbocks 200-1; 200-2 sind jeweils in Fign. 2 und 3 dargestellt. Fig. 2 zeigt zunächst eine Querschnittsansicht 201 des Wellenbocks 200-1. Entlang einer Achse 210-1, welche nach Montage des Wellenbocks an einer Profilschiene parallel zu einer Laufrichtung eines Profilschienenwagens orientiert ist, weist der Wellenbock 200-1 eine Länge A auf. Die Achse 210-1 bildet zudem eine Mittelachse einer zylindrischen Aussparung 220-1, welche ausgebildet ist, einen Schmiermittelgeber aufzunehmen. Senkrecht zu der Profilschiene erstreckt sich der Wellenbock 200-1 über eine Höhe H₂. Dabei besteht ein Abstand H zwischen einer Basisfläche 230-1 des Wellenbocks 200-1 und der Achse 210-1. Ferner weist der Wellenbock 200-1 in einem der Basisfläche 230-1 abgewandten Bereich eine Ausnehmung 240 auf, welche sich senkrecht zu einer Bildebene der Fig. 2 erstreckt. Mit anderen Worten ist die zylindrischen Aussparung 220-1 nicht vollständig von einem Material des Wellenbocks 200-1 umschlossen. In dem Bereich der Ausnehmung 240 befindet sich ferner eine obere Schraubbohrung 250.

Fig. 2 zeigt zudem eine Frontalansicht 202 des Wellenbocks 200-1. Gleiche Komponenten und Merkmale tragen hierin gleiche Bezugszeichen. Der Wellenbock 200-1 weist eine Breite L auf, welche sich orthogonal zu der Länge A und der Höhe H₂ erstreckt. Zur Montage an der Profilschiene befinden sich seitlich der zylindrischen Aussparung 220-1 zwei Schraubbohrungen 260-1; 265-1, die jeweils der Aufnahme einer Montageschraube 270-1 dienen. Vermittels der Montageschraube 270-1 wird der Wellenbock 200-1 starr mit der Profilschiene verbunden. Dabei ist die Basisfläche 230-1 der Profilschiene oder einem mit der Profilschiene starr verbundenen Werkstück zugewandt. Die obere Schraubbohrung 250 ist ausgebildet, um eine Spannschraube 280 aufzunehmen. Die obere Schraubbohrung 250 kann hierzu in einem dem Schraubkopf der Spannschraube 280 abgewandten Bereich 290 ein Gewinde umfassen, welches ausgebildet ist, ein Gewinde der Spannschraube 280 aufzunehmen. Durch Einbringen und Festziehen der Spannschraube 280 in den Bereich 290 kann somit die Ausnehmung 240 verschmälert werden, wodurch eine Verkleinerung eines Umfangs der zylindrischen Aussparung 220-1 bewirkt werden kann. Ist der Schmiermittelgeber in die zylindrische Aussparung 220-1 eingebracht, wird der Schmiermittelgeber auf diese Weise kraftschlüssig an den Wellenbock 200-1 angebunden.

Fig. 3 zeigt ein anderes Ausführungsbeispiel eines Wellenbocks 200-2. Dabei ist zunächst eine Frontalansicht 203 des Wellenbocks 200-2 dargestellt. Der Wellenbock 200-2 weist eine Breite L und eine dazu senkrechte Höhe H₁ auf. Breite L und Höhe H₁ spannen eine Ebene auf, die zu der Laufrichtung des Profilschienenwagens nach einer Montage des Wellenbocks 200-2 senkrecht steht. Der Wellenbock 200-2 umfasst eine zylindrische Aussparung 220-2, deren Mittelachse eine parallel zu der Laufrichtung des Profilschienenwagens stehende Achse 210-2 bildet. Die Achse 210-2 befindet sich in einem Abstand H zu einer Basisfläche 230-2 des Wellenbocks 200-2. Die Basisfläche 230-2 ist nach Montage der Profilschiene oder einem mit der Profilschiene starr verbundenen Werkstück zugewandt. Entsprechend dem in Fig. 2 gezeigten Ausführungsbeispiel weist der Wellenbock 200-2 seitlich der zylindrischen Aussparung 220-2 zwei Schraubbohrungen 260-2; 265-2, die jeweils der Aufnahme einer Montageschraube 270-2 dienen. Dabei umfassen die Schraubbohrungen 260-2; 265-2 ein sich über eine Distanz H₃ erstreckendes Gewinde, welches einen Durchmesser N1 aufweist, der zu einem Durchmesser der Montageschraube 270-2 unter Berücksichtigung eines Spielraumes korrespondiert. Die Schraubbohrungen 260-2; 265-2 weisen in einem weiteren Bereich einen Durchmesser N auf, und sind in einem axialen Abstand J zueinander angeordnet.

Die zylindrische Aussparung 220-2 nimmt ferner ein Ringelement 295 auf, welches aus einem elastischen Material gefertigt sein kann. Durch Einbringen eines Schmiermittelgebers kann dieses Material gedehnt, und somit eine kraftschlüssige Verbindung zwischen Schmiermittelgeber und Wellenbock 200-2 hergestellt werden.

Ferner ist eine Draufsicht 204 auf die Basisfläche 230-2 des Wellenbocks 200-2 gezeigt. Die Schraubbohrungen 260-2; 265-2 sind dabei einander schräg gegenüber gelegen, und haben einen projizierten Abstand J₁ zueinander.

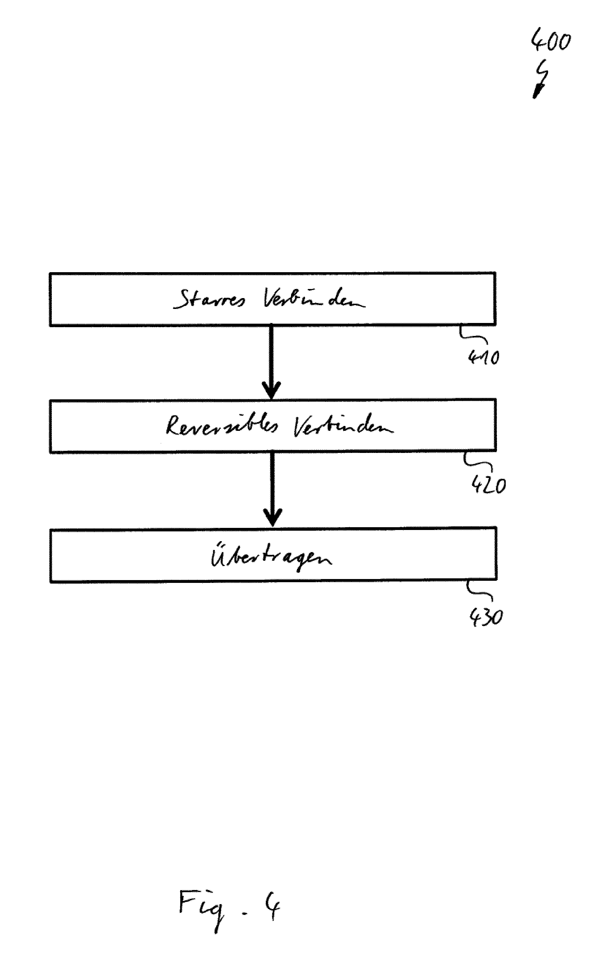

Fig. 4 zeigt ein Flussdiagramm eines Verfahrens 400 für einen Schmiermittelgeber für einen Profilschienenwagen gemäß einem Ausführungsbeispiel. Das Verfahren 400 umfasst ein starres Verbinden 410 einer Profilschiene mit einem Schmiermittelgeber. Das Verfahren 400 umfasst außerdem ein reversibles Verbinden 420 eines Profilschienenwagens an den starr mit der Profilschiene verbundenen Schmiermittelgeber. Weiterhin umfasst das Verfahren 400 ein Übertragen 430 von Schmiermittel von dem Schmiermittelgeber in den Profilschienenwagen. Es können somit möglicherweise zusätzliche Bauteile oder unerwünschte Stillstandszeiten bei regelmäßigen Schmiervorgängen entfallen. Ferner kann eine durch den Profilschienenwagen bewegte Masse reduziert werden, und eine bei dem Schmiervorgang übertragene Schmiermittelmenge an einen zu erwartenden Bedarf angepasst werden. Ebenso oder alternativ kann auch eine Verringerung von Bauteilen erzielbar sein. Gleiches gilt ebenso für eine Menge des Schmiermittels, die gegebenenfalls besser oder optimaler eingestellt werden kann. Es kann also beispielsweise möglich sein, einen Profilschienenwagen im Zusammenspiel mit einem Ausführungsbeipsiel mit einer optimaleren Fettmenge zu betreiben.

Ausführungsbeispiele können bei einer Vielzahl verschiedener Anwendungsszenarien eingesetzt werden, wie beispielsweise Werkzeugmaschinentische, Positioniersysteme, Automatisierungssysteme, Werkzeugmaschinenspindeln, Pumpen, Kompressoren oder auch Lüftern. Aber auch bei anderen Anwendungen können Ausführungsbeispiele zum Einsatz gebracht werden.

Ein Ausführungsbeispiel kann so beispielsweise als Programm mit einem Programmcode zum Durchführen eines Verfahrens gemäß einem Ausführungsbeispiel umgesetzt sein, wenn das Programm auf einer programmierbaren Hardwarekomponente abläuft. Die einzelnen Verfahrensschritte können hierbei durch Ansteuerungen entsprechender Aktuatoren, einem Auslesen von Speicherstellen oder anderen Datenquellen, numerischen und anderen Manipulationen von Daten sowie anderen Prozessen erzielt werden. Im Rahmen eines solchen Programms, jedoch auch im Rahmen anderer Umsetzungen eines Verfahrens gemäß einem Ausführungsbeispiel, können so die einzelnen Prozesse beispielsweise ein Erzeugen, Bereitstellen und gegebenenfalls Empfangen von Steuersignalen, Sensorsignalen und anderen Signalen umfassen. Das Senden kann ebenfalls ein Schreiben oder Abspeichern eines Wertes in eine Speicherstelle oder ein Register umfassen. Entsprechend kann ein Auslesen oder Empfangen auch ein entsprechendes Auslesen eines Registers oder einer Speicherstelle umfassen. Diese Signale können beispielsweise als elektrische, optische oder funktechnische Signale übertragen werden und hinsichtlich ihrer Signalwerte und ihrer zeitlichen Ausgestaltung voneinander unabhängig kontinuierlich oder diskret ausgestaltet sein. Die entsprechenden Signale können so beispielsweise analoge Signale, jedoch auch digitale Signale umfassen.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern und so beispielsweise mittels Aktuatoren auch komplexere Verfahrensschritte durchführen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 100: Linearsystem
- 110: Schmiermittelgeber
- 112: Düse
- 114: Befestigungsstruktur
- 115: Ortsfestes Bauteil
- 116: Schmiermittelkammer
- 120: Profilschiene
- 122: Schraubbohrungen
- 124: Laufrillen
- 125: Linearlager
- 130: Profilschienenwagen
- 132: Schmiernippel
- 140: Laufrichtung
- 200-1; 200-2: Wellenbock
- 201: Querschnittsansicht
- 202: Frontalansicht
- 203: Frontalansicht
- 204: Draufsicht
- 210-1; 210-2: Achse
- 220-1; 220-2: Zylindrische Aussparung
- 230-1; 230-2: Basisfläche
- 240: Ausnehmung
- 250: Obere Schraubbohrung
- 260-1; 260-2: Schraubbohrung
- 265-1; 265-2: Schraubbohrung
- 270: Montageschraube
- 280: Spannschraube
- 290: Bereich
- 295: Ringelement
- 400: Verfahren
- 410: Starres Verbinden
- 420: Reversibles Verbinden
- 430: Übertragen

## Patentansprüche

1. Linearsystem, umfassend:
einen Schmiermittelgeber (110) für ein Linearlager (125), mit einer Düse (112) und einer Befestigungsstruktur (114), welche ausgebildet ist, um die Düse (112) starr mit einem ortsfesten Bauteil (115) zu verbinden und parallel zu einer Laufrichtung (140) des Linearlagers (125) auszurichten;
ein ortsfestes Bauteil (115); und
ein Linearlager (125), wobei das Linearlager (125) einen Schmiernippel (132) aufweist, welcher derart parallel zu einer Laufrichtung (140) des Linearlagers (125) ausgerichtet ist, dass ein Endpunkt einer durch Bewegen des Linearlagers (125) entlang des ortsfesten Bauteils (115) entstehenden Bewegungslinie des Schmiernippels (132) auf der Düse (112) des Schmiermittelgebers (110) liegt.

2. Linearsystem gemäß Anspruch 1, wobei die Befestigungsstruktur (114) einen Wellenbock umfasst.

3. Linearsystem gemäß einem der vorangegangenen Ansprüche, wobei die Düse (112) mit einem parallel zu der Laufrichtung (140) des Linearlagers (125) ausgerichteten Schmiernippel (132) reversibel verbindbar ist, sodass ein Übertrag von Schmiermittel von der Düse (112) über den Schmiernippel (132) in das Linearlager (125) ermöglicht wird.

4. Linearsystem gemäß Anspruch 3, wobei ein Verbinden des Schmiernippels (132) mit der Düse (112) einen Austritt eines Schmiermittels parallel zu der Laufrichtung (140) des Linearlagers (125) über die Düse (112) bewirkt.

5. Linearsystem gemäß einem der vorangegangenen Ansprüche, ferner umfassend ein mit der Düse (112) verbundenes Dosiersystem, welches dazu ausgebildet ist, eine vordefinierte Menge an Schmiermittel über die Düse (112) abzugeben.

6. Linearsystem gemäß einem der vorangegangenen Ansprüche, wobei das Linearlager (125) einen Profilschienenwagen (130) umfasst, und wobei das ortsfeste Bauteil (115) eine Profilschiene (120) umfasst.

7. Linearsystem gemäß einem der vorangegangenen Ansprüche, wobei der Schmiermittelgeber (110) ferner eine mit der Düse (112) verbundene Schmiermittelkammer (116) umfasst, und wobei bei Erreichen des Endpunkts der Bewegungslinie des Schmiernippels (132) der Schmiernippel (132) mit der Düse (112) reversibel verbunden wird, und eine Druckkraft auf die Schmiermittelkammer (116) ausgelöst wird, welche ein Einbringen von Schmiermittel über die Düse (112) und den Schmiernippel (132) in das Linearlager (125) bewirkt.

8. Linearsystem gemäß einem der vorangegangenen Ansprüche, wobei das Linearlager (125) ferner einen Sensor umfasst, welcher dazu ausgebildet ist, eine Veränderung einer Menge an Schmiermittel in dem Linearlager (125) zu ermitteln, und ein Signal bereitzustellen, sobald die Veränderung einen vordefinierten Grenzwert überschreitet, wobei das Signal ein Bewegen des Linearlager (125) derart veranlasst, dass der Schmiernippel mit der Düse (112) reversibel verbunden wird.

9. Linearsystem gemäß einem der vorangegangenen Ansprüche, wobei der Schmiernippel (132) eine Nut zum Einrasten in die Düse (112) des Schmiermittelgebers (110) aufweist.

10. Linearsystem gemäß einem der vorangegangenen Ansprüche, wobei die Düse (112) des Schmiermittelgebers (110) ferner einen sich radial nach innen erstreckenden Einzug zum Einrasten des Schmiernippels (132) aufweist.

11. Verfahren (400) für einen Schmiermittelgeber für ein Linearlager, umfassend:
Starres Verbinden (410) eines ortsfesten Bauteils mit einem Schmiermittelgeber;
Reversibles Verbinden (420) eines Linearlagers an den starr mit dem ortsfesten Bauteil verbundenen Schmiermittelgeber; und
Übertragen (430) von Schmiermittel von dem Schmiermittelgeber in das Linearlager.
